# EUROPEAN PATENT APPLICATION

(11) **EP 4 368 077 A1**
(43) Date of publication of application: **15.05.2024**
(21) Application number: 23208003.6
(22) Date of filing: 06.11.2023
(51) Int. Cl.: A47J 27/00, A47J 36/32

(54) **COOKING APPLIANCE**

(30) Priority: 07.11.2022 CN 202222986456 U
(71) Applicant: Zhejiang Shaoxing Supor Domestic Electrical Appliance Co., Ltd., Shaoxing, Zhejiang 312017 (CN)
(72) Inventor: ZENG, Junbing, Shaoxing (CN); LI, Xiangfei, Shaoxing (CN); WANG, Benxin, Shaoxing (CN)
(74) Representative: LLR

(57) **Abstract**

The present invention provides a cooking appliance comprising a pot body (10) and an upper lid (20). The pot body comprises a housing (11) and an inner pot (12, 13) removably and replaceably arranged in the housing, which is one of a first inner pot (12) and a second inner pot (13). The pot body further comprises a detection assembly (14) comprising a temperature sensing cup (141) and a trigger element (142). A bottom wall of the first inner pot is provided with a first temperature sensing part (121). A bottom wall of the second inner pot is provided with a second temperature sensing part (131). The trigger stroke of the trigger element is smaller than the difference in height between the first temperature sensing part and the second temperature sensing part. When the first inner pot is placed in the housing, the first temperature sensing part is in contact with the temperature sensing cup, and the trigger element is in a triggered state. When the second inner pot is placed in the housing, the second temperature sensing part is in contact with the temperature sensing cup, and the trigger element is in a triggered state. The housing or the upper lid is provided with a display panel (30) capable of switching between operations menus displayed according to the state of the trigger element.

## Description

### Field of the Invention

The present utility relates to the technical field of small domestic appliances, and in particular to a cooking appliance.

### Background of the Invention

As people's quality of life improves, there are more and more product types of cooking appliances. Many kinds of cooking appliances are used for cooking food in daily life.

In the related art, when cooking food, a variety of cooking appliances need to be used. Different inner pots of different cooking appliances are used to meet various food cooking needs.

However, the related art requires the use of a variety of cooking appliances for cooking, resulting in room for improvement in the applicability of the cooking appliances.

### Summary of the Invention

The present invention provides a cooking appliance in order to solve the problem in the related art that a variety of cooking appliances need to be used for cooking, resulting in room for improvement in the applicability of the cooking appliances.

The present invention provides a cooking appliance comprising: a pot body comprising a housing and an inner pot removably and replaceably arranged in the housing, the inner pot being one of a first inner pot and a second inner pot; and an upper lid covering the inner pot arranged in the housing from above in a manner capable of opening and closing; wherein, the pot body further comprises a detection assembly arranged below the inner pot arranged in the housing, the detection assembly comprising a temperature sensing cup floatingly arranged at the housing and a trigger element arranged below the temperature sensing cup, a bottom wall of the first inner pot being provided with a first temperature sensing part, a bottom wall of the second inner pot being provided with a second temperature sensing part, the first temperature sensing part being higher than the second temperature sensing part, the trigging stroke of the trigger element being smaller than the difference in height between the first temperature sensing part and the second temperature sensing part; wherein, when the first inner pot is placed in the housing, the first temperature sensing part is in contact with the temperature sensing cup and the trigger element is in a non-triggered state; when the second inner pot is placed in the housing, the second temperature sensing part is in contact with the temperature sensing cup and the trigger element is in a triggered state; and wherein, the housing or the upper lid is provided with a display panel electrically connected to the trigger element and capable of switching between operations menus displayed according to the state of the trigger element.

By applying the technical solution of the present invention, the cooking appliance comprises the pot body and the upper lid, the first inner pot or the second inner pot in the pot body is replaceably arranged in the housing and capable of performing many types of cooking on food. The detection assembly is arranged below the first inner pot or the second inner pot placed in the housing. As the first temperature sensing part on the bottom wall of the first inner pot is higher than the second temperature sensing part on the bottom wall of the second inner pot and the trigging stroke of the trigger element in the detection assembly is smaller than the difference in height between the first temperature sensing part and the second temperature sensing part, when the first inner pot is placed in the housing, the first temperature sensing part is in contact with the temperature sensing cup and the trigger element does not reach the trigging stroke, at which time the trigger element is in the non-triggered state, and thus the operations menu displayed when the triggered state is not reached can be operated by means of the display panel; when the second inner pot is placed in the housing, the second temperature sensing part is in contact with the temperature sensing cup and the trigger element reaches the trigger stroke, at which time the trigger element is in the triggered state, and the operations menu displayed on the display panel can be switched so that the operations menu displayed in the triggered state can be operated by means of the display panel. Thus, a variety of cooking modes can be integrated into the same cooking appliance, thereby realizing a variety of cooking modes, meeting people's usage needs and improving the applicability of the cooking appliance.

Further, the first temperature sensing part is a recess provided at the bottom wall of the first inner pot that opens downward. By providing the recess at the bottom wall of the first inner pot that opens downward, when the first inner pot is placed in the housing, the recess is in contact with the temperature sensing cup, so that the temperature sensing cup can move downward and drive the trigger element to move downward. Under the effect of the recess, the downward movement stroke of the trigger element does not reach the trigger stroke of the trigger element, at which time the trigger element is in the non-triggered state, so that when the first inner pot is placed in the housing, the display panel displays the operations menu for the trigger element in the non-triggered state.

Further, the bottom wall of the second inner pot is a planar structure, and a part of the bottom wall of the second inner pot forms the second temperature sensing part. As the bottom wall of the second inner pot is set to be a planar structure and a part of the bottom wall forms the second temperature sensing part, it is convenient to produce and process the second inner pot and to put the second temperature sensing part into contact with the temperature sensing cup, thereby ensuring that when the second inner pot is placed in the housing, the temperature sensing cup moves and thus causes the trigger element to reach the triggered state, so that the display panel displays the operations menu for the trigger element in the triggered state, which facilitates operations.

Further, a depth dimension of the recess is the difference in height between the first temperature sensing part and the second temperature sensing part and is between 2.5 mm and 3.5 mm. By using the above-mentioned structure and setting the depth dimension of the recess within the above-mentioned range, it is not only convenient to distinguish between the first inner pot and the second inner pot, but also convenient to operate, thus improving the diversity of the cooking modes of the cooking appliance and facilitating a user's operations and utilization.

Further, the trigger element is a micro switch or a reed switch.

Further, the trigger element comprises a micro switch fixedly arranged in the temperature sensing cup, a lower end of the micro switch is a trigger end, and the micro switch switches to the triggered state when a lower end face of the micro switch comes into contact with an inner surface of the housing. By providing the micro switch and arranging the micro switch in the temperature sensing cup, the bottom wall of the first inner pot or of the second inner pot comes into contact with the temperature sensing cup when the first inner pot or the second inner pot is placed into the housing, so that the temperature sensing cup moves downward and thus drives the micro switch to move downward as the micro switch is fixedly arranged in the temperature sensing cup. When the first inner pot is placed in the housing, due to the recess provided, the lower end face of the micro switch does not come into contact with the inner surface of the housing, at which time the micro switch is in the non-triggered state. When the second inner pot is placed in the housing, as the bottom wall is a planar structure, the micro switch moves downward with the temperature sensing cup, thus causing the trigger end of the lower end of the micro switch to come into contact with the inner surface of the housing, at which time the micro switch switches to the triggered state. It is thus convenient to switch between the operation menus of the display panel, and the micro switch can rapidly transmit forces and has the characteristics of high sensitivity, high reliability and long service life.

Further, the housing comprises a temperature sensing cup base located below the temperature sensing cup. When the micro switch is in the triggered state, the lower end face of the micro switch is in contact with the upper surface of the temperature sensing cup base. By using the above-mentioned structure and arranging the temperature sensing cup base below the temperature sensing cup, it is convenient to assemble the temperature sensing cup and to put the lower end face of the micro switch into contact with the upper surface of the temperature sensing cup base. Thus the control of operations is facilitated by means of the micro switch, and the reliability of the detection assembly is improved.

Further, a distance between the lower end face of the micro switch and the upper surface of the temperature sensing cup base is between 4.5 mm and 5.5 mm. By using the above-mentioned structure, the micro switch and the temperature sensing cup base can cooperate with each other to ensure that the micro switch can switch between the triggered state and the non-triggered state.

Further, in the course of placing the first inner pot in the housing, the movement stroke of the temperature sensing cup is between 3.5 mm and 5.5 mm. By using the above-mentioned structure, for the first inner pot under the effect of the recess, the movement stroke of the temperature sensing cup is smaller than the distance between the lower end face of the micro switch and the upper surface of the temperature sensing cup base. That is to say, the micro switch does not reach the triggered state. Thus, when the first inner pot is placed in the housing, the operations menu in the non-triggered state can be operated by means of the display panel.

Further, in the course of placing the second inner pot in the housing, the movement stroke of the temperature sensing cup is between 7 mm and 9 mm. By using the above-mentioned structure, for the second inner pot under the effect of the planar structure of the bottom wall, the movement stroke of the temperature sensing cup is larger than the distance between the lower end face of the micro switch and the upper surface of the temperature sensing cup base. That is to say, the micro switch reaches the triggered state. Thus, when the second inner pot is placed in the housing, the operations menu in the triggered state can be operated by means of the display panel.

Further, the display panel has panel labels that can be displayed in a first color and a second color that correspond to the triggered state and the non-triggered state respectively. By using the above-mentioned structure and providing the panel labels that can be displayed in two colors, the panel labels can display cooking modes of the cooking appliance. When the first inner pot is placed in the housing, the panel labels on the display panel can display the operations menu under the cooking modes corresponding to the first inner pot with light of the first color, and thus the cooking appliance with the first inner pot placed in it can be used for cooking. When the second inner pot is placed in the housing, the panel labels can display the operations menu under the cooking modes corresponding to the second inner pot with light of the second color. Thus, it can be ensured that the cooking appliance displays different operations menus according to different inner pots placed in it, thereby achieving the diversity of the cooking modes in the cooking appliance.

Further, the temperature sensing cup is located in the center of a heating plate.

### Brief Description of the Drawings

The drawings accompanying the description, which form a part of the present application, are intended to provide further understanding of the present invention. The illustrative embodiments of the present invention and their description are intended to explain the present invention and do not unduly limit the present invention. It should be noted that similar reference signs and letters refer to similar items in the following figures, in which:
Figure 1 shows an exploded view of a cooking appliance provided by an embodiment of the present invention;
Figure 2 shows a sectional view of a cooking appliance provided by an embodiment of the present invention;
Figure 3 shows a partial enlarged view of part A in Figure 2;
Figure 4 shows a sectional view of a first inner pot provided by an embodiment of the present invention;
Figure 5 shows an exploded view of a cooking appliance provided by an embodiment of the present invention;
Figure 6 shows a sectional view of a cooking appliance provided by an embodiment of the present invention;
Figure 7 shows a partial enlarged view of part B in Figure 6;
Figure 8 shows a sectional view of a second inner pot provided by an embodiment of the present invention;
Figure 9 shows a schematic view of the structure of a pot body provided by an embodiment of the present invention;
Figure 10 shows a sectional view along C-C in Figure 9.

The above-mentioned drawings contain the following reference signs:
10: pot body; 11: housing; 12: first inner pot; 121: first temperature sensing part; 1211: recess; 13: second inner pot; 131: second temperature sensing part; 14: detection assembly; 141: temperature sensing cup; 142: trigger element; 1421: micro switch; 15: temperature sensing cup base;
20: upper lid;
30: display panel;
L1: depth dimension of the recess.

### Detailed Description of Preferred Embodiments

The technical solutions in the embodiments of the present invention will be clearly and completely described below in reference to the accompanying drawings in the embodiments of the present invention. Obviously, the embodiments described are only some of the embodiments of the present invention, not all of them. The following description of at least one exemplary embodiment is merely illustrative in nature and is in no way intended to limit the present invention or its applications or uses. Based on the embodiments of the present invention, all other embodiments obtained by those skilled in the art without making any inventive efforts fall within the protection scope of the present invention.

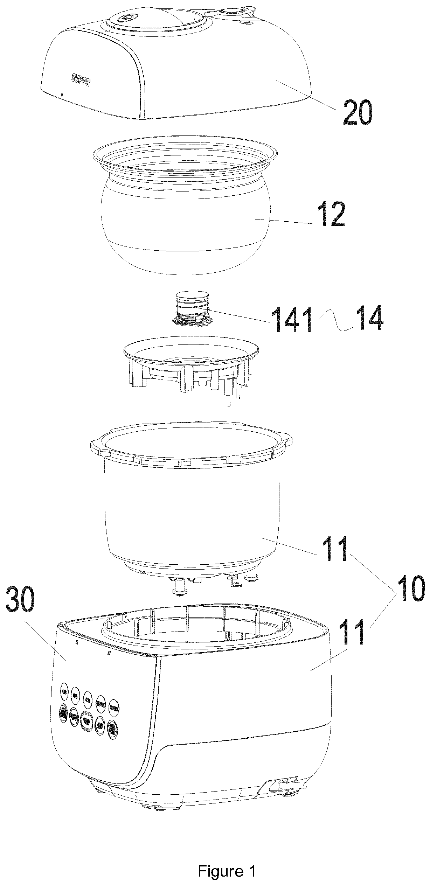

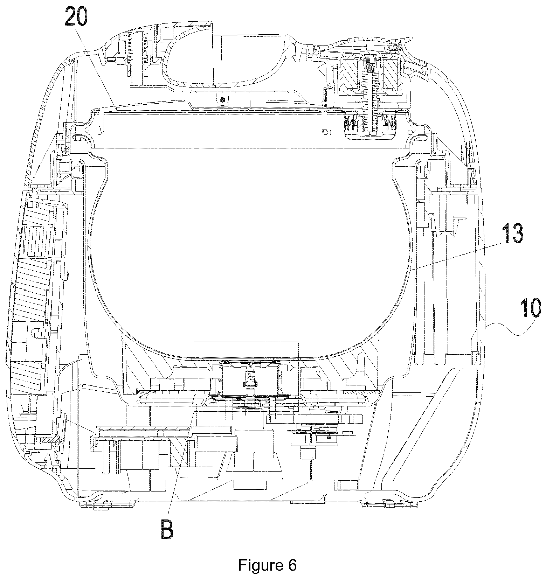

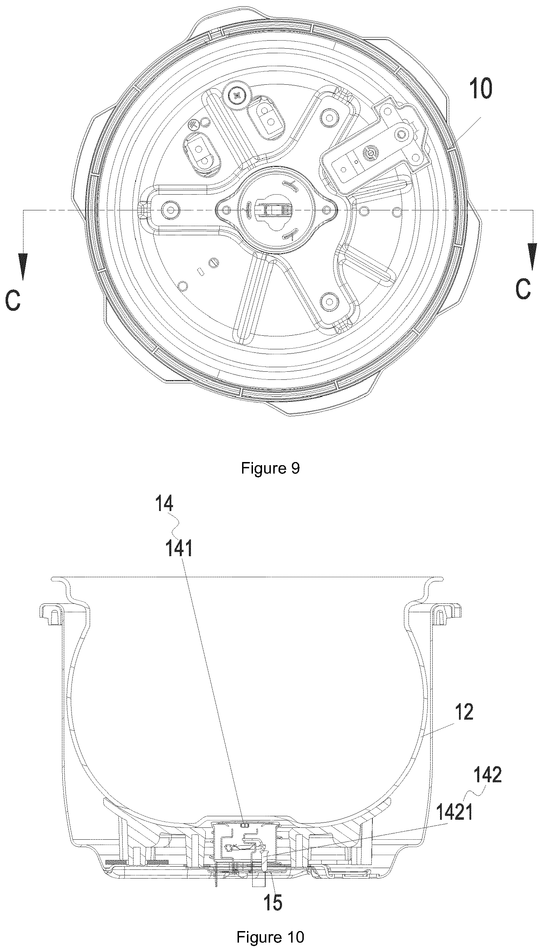

As shown in Figure 1 to Figure 10, an embodiment of the present invention provides a cooking appliance comprising a pot body 10 and an upper lid 20. The pot body 10 comprises a housing 11, a first inner pot 12 and a second inner pot 13. The first inner pot 12 and the second inner pot 13 are removably and replaceably arranged in the housing 11. The upper lid 20 covers the first inner pot 12 or the second inner pot 13 from above in a manner capable of opening and closing. In the embodiment, the pot body 10 further comprises a detection assembly 14 arranged below the first inner pot 12 or the second inner pot 13 and comprising a temperature sensing cup 141 floatingly arranged at the housing 11 and a trigger element 142 arranged below the temperature sensing cup 141. The bottom wall of the first inner pot 12 is provided with a first temperature sensing part 121. The bottom wall of the second inner pot 13 is provided with a second temperature sensing part 131. The first temperature sensing part 121 is higher than the second temperature sensing part 131. The trigger stroke of the trigger element 142 is smaller than the difference in height between the first temperature sensing part 121 and the second temperature sensing part 131. When the first inner pot 12 is placed in the housing 11, the first temperature sensing part 121 is in contact with the temperature sensing cup 141, and the trigger element 142 is in a non-triggered state. When the second inner pot 13 is placed in the housing 11, the second temperature sensing part 131 is in contact with the temperature sensing cup 141, and the trigger element 142 is in a triggered state. The housing 11 or the upper lid 20 is provided with a display panel 30 electrically connected to the trigger element 142, and the display panel 30 is capable of switching between displayed operation menus according to the state of the trigger element 142.

By applying the cooking appliance provided by the present embodiment, the cooking appliance comprises the pot body 10 and the upper lid 20, the first inner pot 12 or the second inner pot 13 in the pot body 10 is replaceably arranged in the housing 11 and capable of performing many types of cooking on food. In this embodiment, the detection assembly 14 is arranged below the first inner pot 12 or the second inner pot 13 placed in the housing 11. As the first temperature sensing part 121 on the bottom wall of the first inner pot 12 is higher than the second temperature sensing part 131 on the bottom wall of the second inner pot 13 and the trigger stroke of the trigger element 142 in the detection assembly 14 is smaller than the difference in height between the first temperature sensing part 121 and the second temperature sensing part 131, when the first inner pot 12 is placed in the housing 11, the first temperature sensing part 121 is in contact with the temperature sensing cup 141 and the trigger element 142 does not reach the trigger stroke, at which time the trigger element 142 is in the non-triggered state, and thus the operations menu displayed when the triggered state is not reached can be operated by means of the display panel 30; when the second inner pot 13 is placed in the housing 11, the second temperature sensing part 131 is in contact with the temperature sensing cup 141 and the trigger element 142 reaches the trigger stroke, at which time the trigger element 142 is in the triggered state, and the operations menu displayed on the display panel 30 can be switched so that the operations menu displayed in the triggered state can be operated by means of the display panel 30. Thus, a variety of cooking modes can be integrated into the same cooking appliance, thereby realizing a variety of cooking modes, meeting people's usage needs and improving the applicability of the cooking appliance.

In addition, as the trigger stroke of the trigger element 142 is smaller than the difference in height between the first temperature sensing part 121 and the second temperature sensing part 131, after the second inner pot 13 is placed in the housing 11, compared to the case where the first inner pot 12 is placed in the housing 11, the temperature sensing cup 141 can continue to move downward by the difference in height, thereby ensuring that the trigger element 142 can definitely be triggered.

It should be noted that, by "the first inner pot 12 and the second inner pot 13 are removably and replaceably arranged in the housing 11," it means that the first inner pot 12 is placed in the housing 11 to perform cooking, and when cooking is finished, the first inner pot 12 can be removed from the housing 11; alternatively, the second inner pot 13 is placed in the housing 11 to perform cooking, and when cooking is finished, the second inner pot 13 can be removed from the housing 11. Thus, both the first inner pot 12 and the second inner pot 13 can be placed in the housing 11 and removed from the housing 11.

In this embodiment, the trigger element 142 can be a micro switch or a reed switch.

Specifically, the trigger stroke refers to the stroke that the trigger element 142 moves from the free state to the triggered state. In the present embodiment, the trigger element 142 is a micro switch, and the trigger stroke refers to the stroke that the micro switch moves from the free state to the triggered state.

As shown in Figure 1 to Figure 4, the first temperature sensing part 121 is a recess 1211 arranged at the bottom wall of the first inner pot 12, and the recess 1211 opens downward. By providing the recess 1211 at the bottom wall of the first inner pot 12 that opens downward, when the first inner pot 12 is placed in the housing 11, the recess 1211 is in contact with the temperature sensing cup 141, so that the temperature sensing cup 141 can move downward and drive the trigger element 142 to move downward. Under the effect of the recess 1211, the downward movement stroke of the trigger element 142 does not reach the trigger stroke of the trigger element 142, at which time the trigger element 142 is in the non-triggered state, so that when the first inner pot 11 is placed in the housing 11, the display panel 30 displays the operations menu for the trigger element 142 in the non-triggered state.

In the present embodiment, the bottom wall of the second inner pot 13 is a planar structure, and a part of the bottom wall of the second inner pot 13 forms the second temperature sensing part 131. As the bottom wall of the second inner pot 13 is set to be a planar structure and a part of the bottom wall forms the second temperature sensing part 131, it is convenient to produce and process the second inner pot 13 and to put the second temperature sensing part 131 into contact with the temperature sensing cup 141, thereby ensuring that when the second inner pot 13 is placed in the housing 11, the temperature sensing cup 141 moves and thus causes the trigger element 142 to reach the triggered state, so that the display panel 30 displays the operations menu for the trigger element 142 in the triggered state, which facilitates operations.

In the present embodiment, the depth dimension L1 of the recess 1211 is the difference in height between the first temperature sensing part 121 and the second temperature sensing part 131 and is between 2.5 mm and 3.5 mm. By using the above-mentioned structure and setting the depth dimension L1 of the recess 1211 within the above-mentioned range, it is not only convenient to distinguish between the first inner pot 12 and the second inner pot 13, but also convenient to operate, thus improving the diversity of the cooking modes of the cooking appliance and facilitating a user's operations and utilization.

It should be noted that, the depth dimension L1 of the recess 1211 can be 2.5 mm, 3 mm, 3.5 mm, or any other value between 2.5 mm and 3.5 mm.

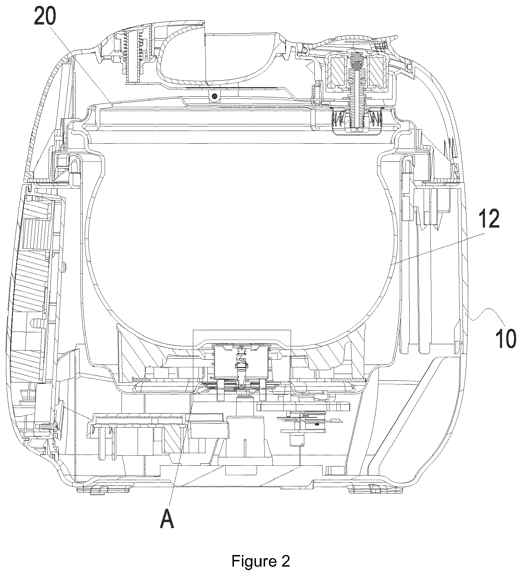

As shown in Figures 2, 3, 6 and 7, the trigger element 142 comprises a micro switch 1421 fixedly arranged in the temperature sensing cup 141. The lower end of the micro switch 1421 is the trigger end. The micro switch 1421 switches to the triggered state when the lower end face of the micro switch 1421 comes into contact with the inner surface of the housing 11. By providing the micro switch 1421 and arranging the micro switch 1421 in the temperature sensing cup 141, when the first inner pot 12 or the second inner pot 13 is placed into the housing 11, the bottom wall of the first inner pot 12 or of the second inner pot 13 comes into contact with the temperature sensing cup 141, so that the temperature sensing cup 141 moves downward and thus drives the micro switch 1421 to move downward as the micro switch 1421 is fixedly arranged in the temperature sensing cup 141. When the first inner pot 12 is placed in the housing 11, due to the recess 1211 provided, the lower end face of the micro switch 1421 does not come into contact with the inner surface of the housing 11, at which time the micro switch 1421 is in the non-triggered state. When the second inner pot 13 is placed in the housing 11, as the bottom wall is a planar structure, the micro switch 1421 moves downward with the temperature sensing cup 141, thereby causing the trigger end of the lower end of the micro switch 1421 to come into contact with the inner surface of the housing 11, at which time the micro switch 1421 switches to the triggered state. It is thus convenient to switch between the operation menus of the display panel 30, and the micro switch 1421 can rapidly transmit forces and has the characteristics of high sensitivity, high reliability and long service life.

It should be noted that the temperature sensing cup 141 is located in the center of a heating plate.

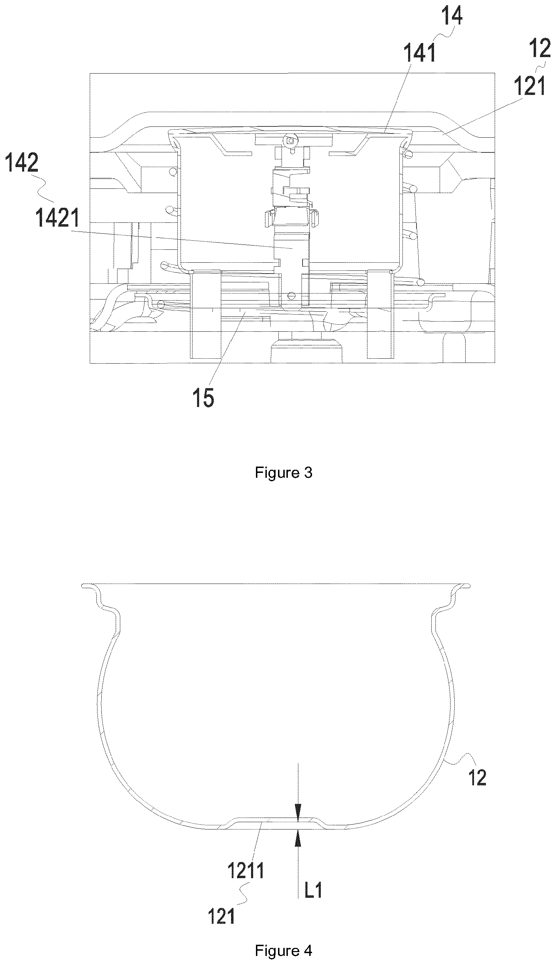

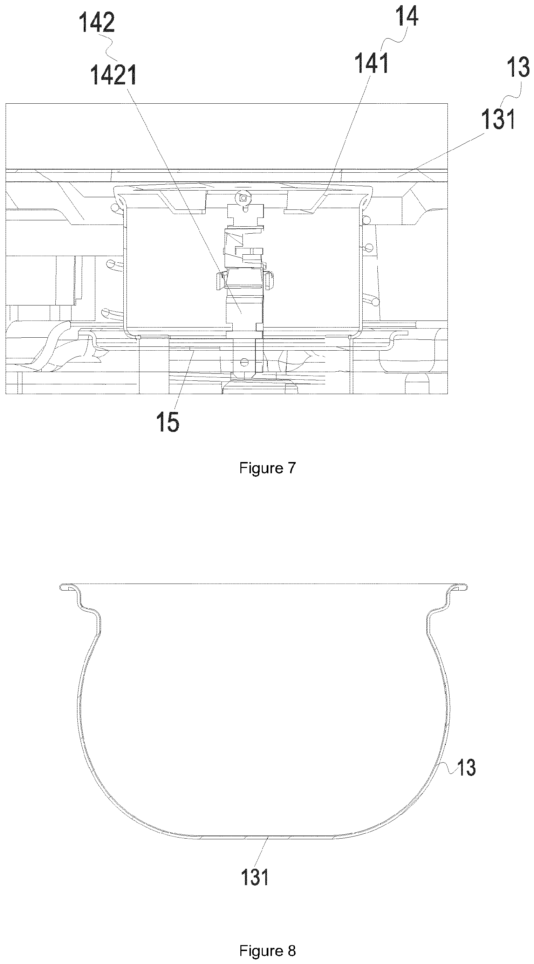

As shown in Figures 3 and 7, the housing 11 comprises a temperature sensing cup base 15 located below the temperature sensing cup 141. When the micro switch 1421 is in the triggered state, the lower end face of the micro switch 1421 is in contact with the upper surface of the temperature sensing cup base 15. By using the above-mentioned structure and arranging the temperature sensing cup base 15 below the temperature sensing cup 141, it is convenient to assemble the temperature sensing cup 141 and to put the lower end face of the micro switch 1421 into contact with the upper surface of the temperature sensing cup base 15. Thus the control of operations is facilitated by means of the micro switch 1421, and the reliability of the detection assembly 14 is improved.

In the present embodiment, the distance between the lower end face of the micro switch 1421 and the upper surface of the temperature sensing cup base 15 is between 4.5 mm and 5.5 mm. By using the above-mentioned structure, the micro switch 1421 and the temperature sensing cup base 15 can cooperate with each other to ensure that the micro switch 1421 can switch between the triggered state and the non-triggered state.

It should be noted that the distance between the lower end face of the micro switch 1421 and the upper surface of the temperature sensing cup base 15 can be 4.5 mm, 5 mm, 5.5 mm, or any other value between 4.5 mm and 5.5 mm.

In the present embodiment, in the course of placing the first inner pot 12 in the housing 11, the movement stroke of the temperature sensing cup 141 is between 3.5 mm and 5.5 mm. By using the above-mentioned structure, for the first inner pot 12 under the effect of the recess 1211, the movement stroke of the temperature sensing cup 141 is smaller than the distance between the lower end face of the micro switch 1421 and the upper surface of the temperature sensing cup base 15. That is to say, the micro switch 1421 does not reach the triggered state. Thus, when the first inner pot 12 is placed in the housing 11, the operations menu in the non-triggered state can be operated by means of the display panel 30.

It should be noted that, in the course of placing the first inner pot 12 in the housing 11, the movement stroke of the temperature sensing cup 141 can be 3.5 mm, 4 mm, 5 mm, 5.5 mm, or any other value between 3.5 mm and 5.5 mm.

In the present embodiment, in the course of placing the second inner pot 13 in the housing 11, the movement stroke of the temperature sensing cup 141 is between 7 mm and 9 mm. By using the above-mentioned structure, for the second inner pot 13 under the effect of the planar structure of the bottom wall, the movement stroke of the temperature sensing cup 141 is larger than the distance between the lower end face of the micro switch 1421 and the upper surface of the temperature sensing cup base 15. That is to say, the micro switch 1421 reaches the triggered state. Thus, when the second inner pot 13 is placed in the housing 11, the operations menu in the triggered state can be operated by means of the display panel 30.

It should be noted that, in the course of placing the second inner pot 13 in the housing 11, the movement stroke of the temperature sensing cup 141 can be 7 mm, 8 mm, 9 mm, or any other value between 7 mm and 9 mm.

It should be noted that when placing the first inner pot 12 in the housing 11, the sum of the movement stroke of the temperature sensing cup 141 and the depth dimension L1 of the recess 1211 is equal to the movement stroke of the temperature sensing cup 141 when placing the second inner pot 13 in the housing 11.

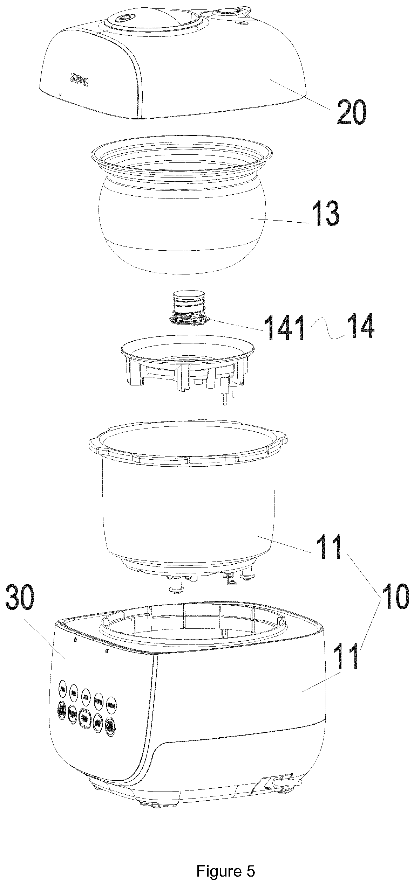

As shown in Figures 1 and 5, the display panel 30 has panel labels that can be displayed in two colors. By using the above-mentioned structure and providing the panel labels that can be displayed in two colors, the panel labels can display cooking modes of the cooking appliance. When the first inner pot 12 is placed in the housing 11, the panel labels on the display panel 30 can display the operations menu under the cooking modes corresponding to the first inner pot 12, and thus the cooking appliance with the first inner pot 12 placed in it can be used for cooking. By replacing the first inner pot 12 placed in the pot body 10 with the second inner pot 13, the panel labels can display the cooking modes corresponding to the second inner pot 13. Thus, it can be ensured that the cooking appliance displays different operations menus according to different inner pots placed in it, thereby achieving the diversity of the cooking modes in the cooking appliance.

It should be noted that, after the first inner pot 12 is placed in the housing 11, the micro switch 1421 is not triggered, and light of a first color illuminates the panel labels. The panel labels have a light filter structure and display the operations menu corresponding to the light of the first color. After the second inner pot 13 is placed in the housing 11, the micro switch 1421 is triggered, and light of a second color illuminates the panel labels. The panel labels display the operations menu corresponding to the light of the second color.

In the present embodiment, the cooking appliance comprises an electrical pressure cooker.

It should be noted that the terms used herein are only for describing specific embodiments and are not intended to limit the exemplary embodiments according to the present application. As used herein, singular forms are also intended to include plural forms unless the context clearly indicates otherwise. Furthermore, it should be understood that when the terms "comprise" and/or "include" are used in this description, they indicate that there is a feature, step, operation, means, component and/or combination thereof.

Unless otherwise specifically stated, the relative arrangements, numeric expressions and numerical values of the components and steps set forth in these embodiments do not limit the scope of the present invention. At the same time, it should be understood that, for convenience of description, the dimensions of various parts shown in the accompanying drawings are not drawn according to actual proportional relationships. Techniques, methods and devices known to those of ordinary skills in the related art may not be discussed in detail, but where appropriate, such techniques, methods and devices should be considered as a part of the description. In all the examples shown and discussed herein, any specific values are to be interpreted as illustrative only and not as limiting. Accordingly, other examples of the exemplary embodiments may have different values. It should be noted that once an item is defined in one figure, it does not need further discussion in subsequent figures.

In the description of the present invention, it should be understood that the orientations or positional relationships indicated by directional words such as "front, back, upper, lower, left, right", "transversal, vertical, perpendicular, horizontal" and "top, bottom" are generally based on the orientations or positional relationships shown in the accompanying drawings and are only for the convenience of describing the present invention and simplifying the description. Unless stated otherwise, these directional words do not indicate or imply that the device or element referred to must have a specific orientation or be constructed and operated in a specific orientation, and therefore cannot be understood as limiting the protection scope of the present invention. The directional words "inside, outside" refer to the inside and outside relative to the outline of each component itself.

For the convenience of description, spatial relative terms can be used herein, such as "on", "above", "on the upper surface of', "on top of" and so on to describe the spatial relationship between a part or feature and another part or feature as shown in the figures. It should be understood that the spatial relative terms are intended to include different orientations of a part in use or operation in addition to the orientations illustrated in the figures. For example, if a part in the figure is placed upside down, then the part described as being "above" or "on" another part or configuration would then be oriented as being "below" or "under" the another part or configuration. Thus, the exemplary term "above" may include both orientations "above" and "below." The part may be otherwise oriented (rotated 90 degrees or at other orientations) and the spatial relative description used herein is to be interpreted accordingly.

In addition, it should be noted that the use of words such as "first" and "second" to define parts is only intended to facilitate the distinction between the corresponding parts. Unless otherwise stated, the above words have no special meaning and therefore cannot be understood as limiting the protection scope of the present invention.

What have been described above are only preferred embodiments of the present invention and are not intended to limit the present invention. For those skilled in the art, the present invention may have various modifications and changes. Any modifications, equivalent replacements, improvements and so on made within the spirit and principles of the present invention shall be included in the protection scope of the present invention.

## Claims

1. A cooking appliance, **characterized in that**, the cooking appliance comprises:
- a pot body (10) comprising a housing (11) and an inner pot removably and replaceably arranged in the housing (11), the inner pot being one of a first inner pot (12) and a second inner pot (13); and
- an upper lid (20) covering the inner pot (12, 13) arranged in the housing (11) from above in a manner capable of opening and closing;
wherein, the pot body (10) further comprises a detection assembly (14) arranged below the inner pot (12, 13) arranged in the housing (11), the detection assembly (14) comprises a temperature sensing cup (141) floatingly arranged at the housing (11) and a trigger element (142) arranged below the temperature sensing cup (141), a bottom wall of the first inner pot (12) is provided with a first temperature sensing part (121), a bottom wall of the second inner pot (13) is provided with a second temperature sensing part (131), the first temperature sensing part (121) is higher than the second temperature sensing part (131), and the trigger stroke of the trigger element (142) is smaller than the difference in height between the first temperature sensing part (121) and the second temperature sensing part (131);
wherein, when the first inner pot (12) is placed in the housing (11), the first temperature sensing part (121) is in contact with the temperature sensing cup (141), and the trigger element (142) is in a non-triggered state; when the second inner pot (13) is placed in the housing (11), the second temperature sensing part (131) is in contact with the temperature sensing cup (141), and the trigger element (142) is in a triggered state;
and wherein, the housing (11) or the upper lid (20) is provided with a display panel (30) electrically connected to the trigger element (142), and the display panel (30) is capable of switching between operations menus displayed according to the state of the trigger element (30).

2. The cooking appliance of claim 1, **characterized in that**, the first temperature sensing part (121) is a recess (1211) provided at the bottom wall of the first inner pot (12), and the recess (1211) opens downward.

3. The cooking appliance of any of claims 1 and 2, **characterized in that**, the bottom wall of the second inner pot (13) is a planar structure, and a part of the bottom wall of the second inner pot (13) forms the second temperature sensing part (131).

4. The cooking appliance of claim 2, **characterized in that**, a depth dimension (L1) of the recess (1211) is the difference in height between the first temperature sensing part (121) and the second temperature sensing part (131) and is between 2.5 mm and 3.5 mm.

5. The cooking appliance of any of claims 1 to 4, **characterized in that**, the trigger element (142) is a micro switch (1421) or a reed switch.

6. The cooking appliance of any of claims 1 to 4, **characterized in that**, the trigger element (142) comprises a micro switch (1421) fixedly arranged in the temperature sensing cup (141), a lower end of the micro switch (1421) is a trigger end, and the micro switch (1421) switches to the triggered state when a lower end face of the micro switch (1421) comes into contact with the inner surface of the housing (11).

7. The cooking appliance of claim 6, **characterized in that**, the housing (11) has a temperature sensing cup base (15) located below the temperature sensing cup (141), and the lower end face of the micro switch (1421) is in contact with an upper surface of the temperature sensing cup base (15) when the micro switch (1421) is in the triggered state.

8. The cooking appliance of claim 7, **characterized in that**, the distance between the lower end face of the micro switch (1421) and the upper surface of the temperature sensing cup base (15) is between 4.5 mm and 5.5 mm.

9. The cooking appliance of any of claims 1 to 8, **characterized in that**, in the course of placing the first inner pot (12) in the housing (11), the movement stroke of the temperature sensing cup (141) is between 3.5 mm and 5.5 mm.

10. The cooking appliance of any of claims 1 to 9, **characterized in that**, in the course of placing the second inner pot (13) in the housing (11), the movement stroke of the temperature sensing cup (14) is between 7 mm and 9 mm.

11. The cooking appliance of any of claims 1 to 10, **characterized in that**, the display panel (30) has panel labels that can be displayed in a first color and a second color that correspond to the triggered state and the non-triggered state respectively.

12. The cooking appliance of claim 11, **characterized in that**, when the first inner pot (12) is placed in the housing (11), the panel labels display the operations menu under the cooking modes corresponding to the first inner pot (12) with light of the first color; when the second inner pot (13) is placed in the housing (11), the panel labels display the operations menu under the cooking modes corresponding to the second inner pot (13) with light of the second color.

13. The cooking appliance of any of claims 1 to 12, **characterized in that**, the temperature sensing cup (141) is located in the center of a heating plate.
